(19) **Europäisches Patentamt**
**European Patent Office**
**Office européen des brevets**

(11) **EP 4 571 488 A1**

(12) **EUROPEAN PATENT APPLICATION**

(43) Date of publication:
**18.06.2025 Bulletin 2025/25**

(21) Application number: **23216705.6**

(22) Date of filing: **14.12.2023**

(51) International Patent Classification (IPC):
*G06F 7/58* (2006.01)

(52) Cooperative Patent Classification (CPC):
**G06F 7/58**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicants:
• **Imec VZW**
**3001 Leuven (BE)**
• **Katholieke Universiteit Leuven**
**KU Leuven Research & Development**
**3000 Leuven (BE)**

(72) Inventors:
• **GAMAGE, Sahan**
**Cambridge, CB1 8NJ (GB)**
• **VERHELST, Marian**
**2800 Mechelen (BE)**
• **GARCIA REDONDO, Fernando**
**Cambridge, CB43NG (GB)**

(74) Representative: **Winger**
**Mouterij 16 bus 101**
**3190 Boortmeerbeek (BE)**

(54) **PROBABILISTIC BIT COMPATIBLE SAMPLING DEVICE FOR ARBITRARY DISCRETE RANDOM VARIABLES**

(57) A hardware sampling device (200) and related method for generating observations of arbitrary random variables from probabilistic bits are disclosed. The sampling device comprises a programming unit (250) for adjusting the mean value of probabilistic bits generated by each one of a plurality of probabilistic bit generators (271a-h), a binary selection tree structure (210) comprising a plurality of nodes, and a detection logic circuit (240) for detecting a tie condition for each depth stage of the binary selection tree (210). Each node comprises a selector circuit (213) connected between a pair of input terminals (211a-b) and an output terminal (212). The and configured to randomly admit one of the two input signals to the output terminal if a tie condition is detected, or else admit the input signal which represents a logical '1'. The position index bit related to the admitted input signal is supplied to the output terminal of the node and concatenated with a sequence of previously transmitted position index bits.

FIG. 2

## Description

### Field of the invention

The present invention generally relates to the field of random number sampling and more specifically relates to sampling hardware devices and sampling techniques that use reconfigurable random bit streams as inputs.

### Background of the invention

Probabilistic bits have widespread applications in the fields of cryptography, probabilistic computing, computer statistics, stochastic machine learning, and many others. With the advent of hardware devices for probabilistic bit generation, the search for hardware-based solutions to the problem of an efficient sampling of arbitrary random variables becomes even more pressing.

Various software-based sampling techniques for arbitrary random variables are known in the art, which allow to generate observations of arbitrary random variables based on independent samples of a continuous uniform random variable, e.g. as approximated by a pseudorandom number generator. One popular approach to sampling probability distributions of interest is the rejection-acceptance sampling technique. Although its software implementation is straightforward, a drawback of the rejection-acceptance sampling technique is that it may take a long time before a trial sample is eventually accepted. This problem is aggravated if the distribution of interest is concentrated in narrow regions of the event space.

The inverse transform sampling or slice sampling approaches as alternative software-based sampling techniques produce a sample for the probability distributions of interest for each trial sample of the uniform random variable. However, the inverse transform sampling operates on the cumulative density function and its inverse, which often cannot be expressed in terms of elementary functions, and slice sampling requires the determination of the slice boundaries, which is not straightforward, especially for multimodal distributions.

Therefore, most software-implemented sampling techniques are not suited for hardware implementation or cannot be implemented efficiently in hardware.

In P. Debashis, et al. "Gaussian Random Number Generator With Reconfigurable Mean and Variance Using Stochastic Magnetic Tunnel Junctions", IEEE Magnetics Letters, vol. 13, pp. 1-5, 2022, the authors disclose sample generation for a Gaussian probability distribution based on random binary sequences from a network of tunable p-bit generator cells. A disadvantage of the disclosed method is that one can only sample Gaussian distributions. Moreover, a more complex interconnection network architecture between p-bit general cells has to be controlled.

There is a need for hardware implementations sampling devices that efficiently generate samples for arbitrary probability distributions of interest.

### Summary of the invention

It is an object of embodiments of the present invention to provide hardware implementations sampling devices that efficiently generate samples for arbitrary probability distributions of interest.

The above objective is accomplished by a device and method according to the present invention.

In one aspect, the present invention relates to a hardware sampling device for generating observations of arbitrary discrete random variables from probabilistic bits. The sampling device comprises a programming unit, a binary selection tree structure comprising a plurality of nodes, and a detection logic circuit. Each node of the binary selection tree structure has a depth in the binary selection tree structure and the plurality of nodes are organized into depth stages in accordance with each node's depth in the binary selection tree structure. Moreover, each node comprises a pair of input terminals for receiving a corresponding pair of input signals, a position index bit being associated with the pair of input terminals for identifying the different input terminals of the node, an output terminal and a selector circuit connected between the input terminals and the output terminal. The programming unit is configured to generate a plurality of programming signals for adjusting a statistical expectation of probabilistic bits generated by each one of a plurality of probabilistic bit generators, wherein the plurality of programming signals are generated in accordance with a probability mass function associated with the discrete random variable of interest. The programming unit is operatively connectible to a plurality of programmable probabilistic bit generators. The detection logic circuit is configured to detect a tie condition for each depth stage of the binary selection tree structure and generate a first select signal indicative of the tie condition. Each input signal received by one of the plurality of nodes comprises a probabilistic bit as a first signal component and an indexing bit sequence as second signal component, the indexing bit sequences received by the leaf nodes being empty sequences. The input terminal of each leaf node of the binary selection tree structure is connectible to a respective one of the probabilistic bit generators to receive a corresponding probabilistic bit as the first signal component of the input signal. The tie condition and the therefor generated first select signal are affirmative for any one depth stage if the first signal components of at least one pair of input signals received by the nodes of the depth stage both represent a logical '1' state. The selector circuit of each node is configured to randomly admit one of the two input signals present at the pair of input terminals of the node with equal probabilities to the output terminal of the node if the corresponding first select signal is affirmative, or else admit the input signal of which the first signal component represents a logical '1' state to the output terminal of the node. The selector circuit always supplies the position index bit related to the admitted input signal to the output terminal of the node. The input signal admitted to the output terminal of the node is defined as the output signal of the node. The binary selection tree structure is adapted to update the output signal of each node by concatenating the position index bit at the output terminal of the node with the second signal component of the output signal of the node, thus obtaining an extended indexing bit sequence as updated second signal component, and relay the updated output signals of children nodes to the respective parent nodes.

In accordance with embodiments of the invention, the active nodes of the binary selection tree structure may be divided into two disjoint node groups at each selection cycle of the sampling device, depending on whether or not a tie condition is detected in the depth stage to which the node belongs. The nodes in different node groups have a different input-output behavior (Boolean logic function describing the function of the selector circuit), which is controlled by the different values of the first select signal that is supplied to the selector circuit.

According to some embodiments of the invention, the selector circuit of each node may be a combinatorial circuit configured to determine which one of the two input signals is accepted, based on the following selection rules/input scenarios:

$$IND = DP*RBS + INP1*NOT(DP),$$

and

$$OUT = INP0*(NOT(DP) + DP*NOT(RBS)) + INP1*(NOT(DP) + DP*RBS),$$

wherein the indicator bit 'DP' of the first select signal designates the existence or absence of a tie condition for the depth stage that contains the selector circuit, the auxiliary random bit of the second select signal is designated as 'RBS', the position index bit supplied at the output terminal of the tree node containing the selector circuit is designated as 'IND', and the pair of input bits are designated as 'INP0' and 'INP1', wherein 'INP0' stems from the child node at relative positions '0' and 'INP1' stems from the child node with relative position '1'. Here, child node has to be replaced by input terminal of the sampling device for leaf nodes. Moreover, a signal mean value <RBS> of a sequence of random bits RBS is <RBSW> = 0.5.

In another aspect, the present invention relates to a method of generating observations of a discrete random variable of interest. A probability mass is associated with the discrete random variable of interest. The method comprising the steps of:

generating a probabilistic bit stream for each value of the discrete random variable of interest, a statistical expectation of random bits comprised by the probabilistic bit stream corresponding to the probability mass function evaluated at that value of the discrete random variable of interest;

obtaining a sample of random bits from the probabilistic bit streams;

providing a binary selection tree in hardware, the binary selections tree comprising a plurality of nodes, each node of the binary selection tree accepting one bit of an ordered bit pair as node output and each parent node of the binary selection tree receiving an ordered bit pair from the corresponding child nodes as node inputs;

arranging the random bits of the sample of random bits into ordered pairs of random bits and applying the ordered pairs of random bits to respective leaf nodes of the binary selection tree;

completing a predetermined number of selection cycles of the binary selection tree to obtain an observation of the discrete random variable of interest as output of a root node of the binary selection tree structure;

wherein completing each selection cycle of the binary selection tree comprises:

dividing the nodes of the binary selection tree structure into a first node group and a second node group, by assigning nodes belonging to a same depth level of the binary selection tree to the first node group if a tie is detected for that depth level, and to the second node group otherwise, wherein a tie for a bit pair corresponds to both bits having observed logical states equal to logical one;

for each node of the second node group, randomly choosing with uniform probability a bit of the ordered bit pair received as node inputs as the one bit to be accepted as node output;

for each node of the second node group, selecting a non-zero bit of the ordered bit pair received as node inputs as the one bit to be accepted as node output;

for each node, recording a position index bit associated with the position of the bit accepted as node output in the ordered bit pair received as node inputs;

updating an indexing bit sequence for each parent node, by concatenating the position index bit recorded for the parent node with the indexing bit sequence of the child node supplying the bit accepted as the parent node output;

updating an indexing bit sequence for each leaf node, by appending the position index bit recorded for the leaf node to an empty sequence.

In some embodiments of the invention, the method may comprise the further step of discretizing a continuous probability density function associated with a continuous random variable, thus obtaining the probability mass function for the discrete random variable of interest as an approximation of the continuous probability function.

In some embodiments of the invention, the method may comprise the further steps of:

providing a plurality of programmable probabilistic bit generators;

assigning each value of the discrete random variable to one of the programmable probabilistic bit generators;

programming the probabilistic bit generators in accordance with the probability mass function;

optionally, determining a reduced probability mass function, by associating multiple occurrences of a probability of the probability mass function with a unique alias for the probability;

optionally, storing the values of the discrete random variable that have a common probability in an entry of a look up table, alongside with the corresponding unique alias as a reference to the entry, selecting an entry of the look up table based on a unique alias and, upon selection of the entry, uniformly draw a value out of the values of the discrete random variable stored in the selected entry of the look up table.

Particular and preferred aspects of the invention are set out in the accompanying independent and dependent claims. Features from the dependent claims may be combined with features of the independent claims and with features of other dependent claims as appropriate and not merely as explicitly set out in the claims.

For purposes of summarizing the invention and the advantages achieved over the prior art, certain objects and advantages of the invention have been described herein above. Of course, it is to be understood that not necessarily all such objects or advantages may be achieved in accordance with any particular embodiment of the invention. Thus, for example, those skilled in the art will recognize that the invention may be embodied or carried out in a manner that achieves or optimizes one advantage or group of advantages as taught herein without necessarily achieving other objects or advantages as may be taught or suggested herein.

The above and other aspects of the invention will be apparent from and elucidated with reference to the embodiment(s) described hereinafter.

## Brief description of the drawings

The invention will now be described further, by way of example, with reference to the accompanying drawings, in which:

FIG. 1 illustrates the mapping of a probability distribution of interest onto a set of probabilistic bit streams, which are used as inputs to a hardware sampling device in accordance with the invention.

FIG. 2 is a block diagram of a sampling device in accordance with an embodiment of the invention.

FIG. 3 explains details of the selection process performed by the nodes and the flow of information between the nodes of the binary selection tree structure that is used in sampling devices according to embodiments of the invention.

FIG. 4 shows the circuit diagram for an exemplary selector circuit that can be used in embodiments of the invention.

FIG. 5 and FIG. 6 are variations of circuit diagrams for an exemplary detection unit that can be used in the detection logic circuit of sampling devices in accordance with embodiments of the invention.

FIG. 7 and FIG. 8 explain the deactivation of tree nodes and the selection of subtrees in a binary selection tree structure, respectively, which can be used in embodiments of the invention.

FIG. 9 shows a probability distribution that is symmetrical.

FIG. 10 shows a variant of a root node of a binary selection tree structure, or a selected subtree thereof, which can be used in a sampling device according to an embodiment of the invention when observations of a random variable of interest are generated from a probability distribution that is symmetrical.

FIG. 11 shows an example of a probability distribution with many occurrences of at least one probability value and the creation and assignment of a unique alias for the multiple occurrences of the probability value.

FIG. 12 shows a variant of a sampling device in accordance with an embodiment of the invention, in which the programming unit is configured to determine a reduced probability mass function.

FIG. 13 illustrates simulation results for different probability density functions sampled by a sampling device in accordance with embodiments of the invention.

FIG. 14 illustrates simulation results for a probability density function sampled at different precision bit depths by a sampling device in accordance with embodiments of the invention.

The drawings are only schematic and are non-limiting. In the drawings, the size of some of the elements may be exaggerated and not drawn on scale for illustrative purposes. The dimensions and the relative dimensions do not necessarily correspond to actual reductions to practice of the invention.

Any reference signs in the claims shall not be construed as limiting the scope.

In the different drawings, the same reference signs refer to the same or analogous elements.

## Detailed description of illustrative embodiments

The present invention will be described with respect to particular embodiments and with reference to certain drawings but the invention is not limited thereto but only by the claims.

Directional terminology such as top, bottom, front, back, leading, trailing, under, over and the like in the description and the claims is used for descriptive purposes with reference to the orientation of the drawings being described, and not necessarily for describing relative positions. Because components of embodiments of the present invention can be positioned in a number of different orientations, the directional terminology is used for purposes of illustration only, and is in no way intended to be limiting, unless otherwise indicated. It is, hence, to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art.

In the description provided herein, numerous specific details are set forth. However, it is understood that embodiments of the invention may be practiced without these specific details. In other instances, well-known methods, structures and techniques have not been shown in detail in order not to obscure an understanding of this description.

As opposed to classical bits that have a well-defined logical state (i.e., either true or false) for computational purposes, probabilistic bits, or p-bits, are rapidly fluctuating classical bits that have the capability of emulating non-deterministic aspects on classical digital hardware. Large numbers of p-bits can be coupled to form p-bit networks as a powerful computational resource, e.g. in the form of a coprocessor. Moreover, digital circuits can be specifically adapted to process p-bits. For computation time spans larger than the autocorrelation lifetime of the p-bit, which depends on its physical device implementation, the rapid fluctuations average out to a deterministic value, i.e. the expectation value for the series of random transitions associated with the p-bit operation. This expectation value is typically a control variable for the operation of a p-bit device, meaning that the p-bit device itself or auxiliary circuitry is comprising a control means for tuning the expectation value associated with the p-bit. Tunable probabilistic bit generators based on magnetic tunnel junction stacks formed over an SOT track (spin orbit torque) have been described, e.g., in P. Debashis, et al. "Gaussian Random Number Generator With Reconfigurable Mean and Variance Using Stochastic Magnetic Tunnel Junctions", IEEE Magnetics Letters, vol. 13, pp. 1-5, 2022. Therein, the SOT current influences the random switching behavior of the magnetoresistance of the MJT stack.

When reference is made to a height of a tree node, this refers to the smallest number of edges that connect the tree node in question to one of the leaf nodes of the binary tree. The height of the binary tree refers to the height of the root node of the binary tree.

When reference is made to a depth of a tree node, this refers to the smallest number of edges that connect the tree node in question to the root node of the binary tree. Depth stages are associated with the set of tree nodes that have the same node depth. The depth stages of the binary tree are enumerated by increasing levels of node depth, starting with the root node as the only tree node in level-zero depth stage.

A perfect binary tree is a binary tree in which all non-leaf nodes have exactly two children and the leaf nodes all have maximum depth.

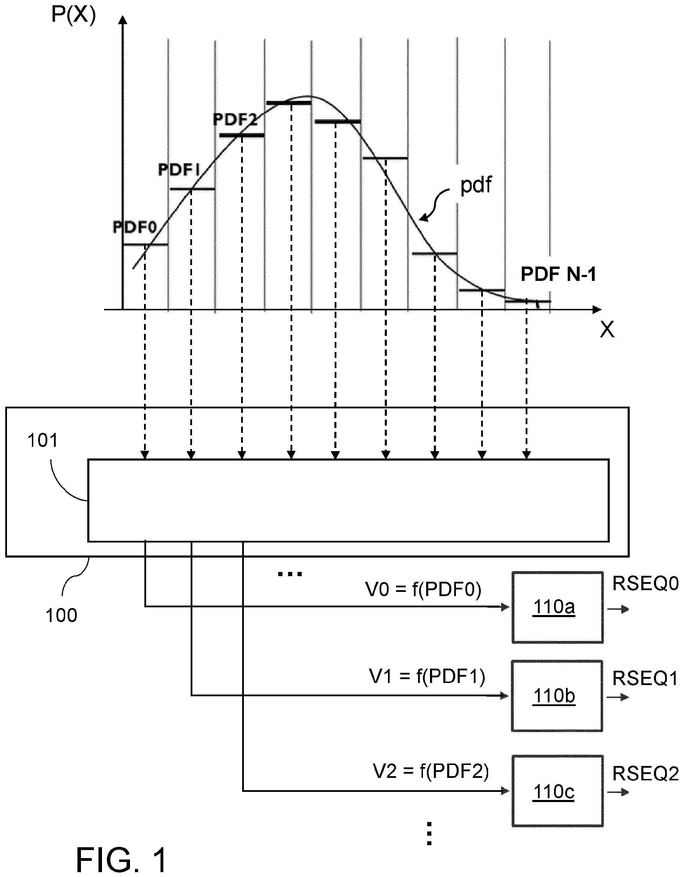

FIG. 1 illustrates the mapping of a probability distribution of interest onto a set of probabilistic bit streams, which are used as inputs to a hardware sampling device in accordance with the invention. In embodiments of the invention, the probability distribution to be sampled from may be an arbitrary probability mass function associated with an arbitrary finite discrete random variable. Alternatively, the probability distribution to be sampled from may be a discretized version of an arbitrary continuous probability density function (pdf) associated with an arbitrary continuous random variable. The discretized version of the arbitrary continuous probability density function is the approximation of the probability density function by a discrete probability mass function. When reference is made to "arbitrary probability distributions" in the context of the present invention, the term "arbitrary" therefore has both the meaning of "arbitrary shape" of the distribution of interest and "arbitrary degree of approximation" of the distribution of interest. Approximations to continuous probability density functions may be characterized by the quantization error, the number of intervals used for discretization (also referred to as number of bins), or the size of the largest bin. Approximations of discrete probability distributions, represented by the probability mass function, can arise in the context of truncation, where insignificantly small probabilities are discarded, or finding a coarser probability mass function as a more compact substitute. In FIG. 1, a smooth probability density function 'pfd' is shown whose outcomes are continuously distributed along the horizontal axis and for which the respective probability of occurrence is reported as function value on the vertical axis. The smooth probability density function is approximated by a discrete random variable 'X' that takes 'N' different values (outcomes) along the horizontal axis. A probability mass function, P(X), is associated with the discrete random variable X and assigns a probability value to each one of the N different values of X. The discretization of the smooth probability density function 'pdf' may include the step of integrating the probability density over the respective discretization intervals/bins along the horizontal axis and assign to each bin the corresponding result of this integration, i.e., assign to each outcome x of X a probability P(x) such that P(x) equals the integral value of the continuous function 'pdf(x)' when calculated over the discretization interval I[x] that contains 'x'. In the figure, these probabilities P(x) are indicated as short straight line segments and are labelled as PDF0, PDF1, ..., PDF N-1. In embodiments of the invention, the N different outcomes of the discrete random variable X may be designated by the midpoints of the respective discretization intervals or simply labelled by an index as a reference to the respective discretization interval/bin. The most practical but non-limiting choice of index labelling of the bins is to refer to them by their order of appearance along the horizontal axis, e.g. as x being an element of the finite set {bin(0), bin(1), ..., bin(N-1)} or as x being an element of the index set i = {0, 1, ..., N-1}, where the index 'i' designates the corresponding bin: i->bin(i). The elements of the index set may be represented as binary numbers and/or the index set may be recentered about its mean, e.g., $i\_cen = \{-N/2, ..., -1, 1, ..., N/2\}$ if N is pair, or else $i\_cen = \{-(N-1)/2, ..., -1, 0, 1, ..., (N-1)/2\}$. A hardware sampling device 100 in accordance with embodiments of the invention comprises a programming unit 101 that is operatively connectible to a plurality of programmable probabilistic bit generators 110a, 110b, 110c, and so forth. The programming unit 101 is configured to accept a set of probability values (e.g., PDF0, PDF1, ..., PDF N-1) related to the discrete random variable as inputs and generate a corresponding set of programming signals (e.g., V0 = f(PDF0), V1 = f(PDF1), V2 = f(PDF2), etc.) for setting a statistical expectation (mean value) of sequences of probabilistic bits generated by each one of the probabilistic bit generators 110a, 110b, 110c, etc. The programming signals may be control signals that are applied - sequentially or in parallel - to auxiliary driver circuits for the different probabilistic bit generators, or the programming signals may be directly applied as control/driver signals to the different probabilistic bit generators. The programming unit may invoke or perform a p-bit hardware dependent transformation 'f' that maps the probability values to appropriate programming signals, e.g. by accessing a calibrated look-up table. When programming of the probabilistic bit generators has been completed successfully, the random bit sequences or p-bit streams produced at the outputs of the probabilistic bit generators 110a, 110b, 110c, etc. all follow a Bernoulli distribution the expected value of which is determined by, e.g. coincide with, one of the probability values of the probability mass function related to the distribution of interest to be sampled from. In other words, there is a unique association between each of the discretization intervals/bins for the random variable of interest, bin(0), bin(1), etc., and one of the random sequences, RSEQ0, RSEQ1, etc., such that the probability of observing the bin is equal to - up to a quantization error - the expected value of the corresponding random sequence. That is, there is an association bin(i) -> RSEQi, i = 0, 1, ..., N-1, such that P(x = bin(i)) = E[RSEQi], where E[*] designates the mean/expected value operator. It also follows that observations of each probabilistic bit sequence, RESQ1, RSEQ2, etc., e.g. as sampled at a given time, are instances of independent Bernoulli trials, which reflect the chances of or rejecting or accepting a sample 'u' from a uniform random variable, U[i], with respect to the corresponding bin, bin(i), depending on whether the sample 'u' is exceeding the probability mass function value for that bin or not. Indeed, the probability of acceptance is $Prob(u \leq PDFi) = PDFi/max(PDF) \propto PDFi$ for the i-th bin. In embodiments of the invention, the probability distribution is preferably scaled, rather than being area normalized, such that its mode 'pmax' (i.e. the maximum probability value) equals one, e.g. setting pmax = 1. In that sense, the array of probabilistic bit generators 110a, 110b, 110c, etc. emulates a vast parallelization of independent trials similar to the rejection-acceptance approach, distributed over the whole range of outcomes of the underlying random variable. The hardware sampling device in accordance with embodiments of the invention then provides an efficient means of selecting one successive trial out of the vast number of independent trials. This ensures that, apart from a predetermined delay, a successive sample of the probability distribution of interest is obtained at each clock cycle of the sampling device.

Although the preceding part of the description considered probabilistic bit generators, such as low-barrier magnetic tunnel junctions, as particular examples of tunable sources of probabilistic bit sequences, other tunable sources of rapidly fluctuating random or pseudorandom bits may be used as the programmable targets addressed by the programming unit in hardware sampling devices in accordance with embodiments of the invention. For instance, linear-feedback shift registers (LFSR) as pseudorandom number generators may be used as sources of random bit sequences with controllable mean value. Moroevr, in the case that there are too many discretization bins compared to the available amount of probabilistic bit generators in a p- bit array, which may be of the order of thousands of probabilistic bit generators, the probability mass function for the discrete random variable of interest may be truncated or another p-bit array may be allocated and programmed.

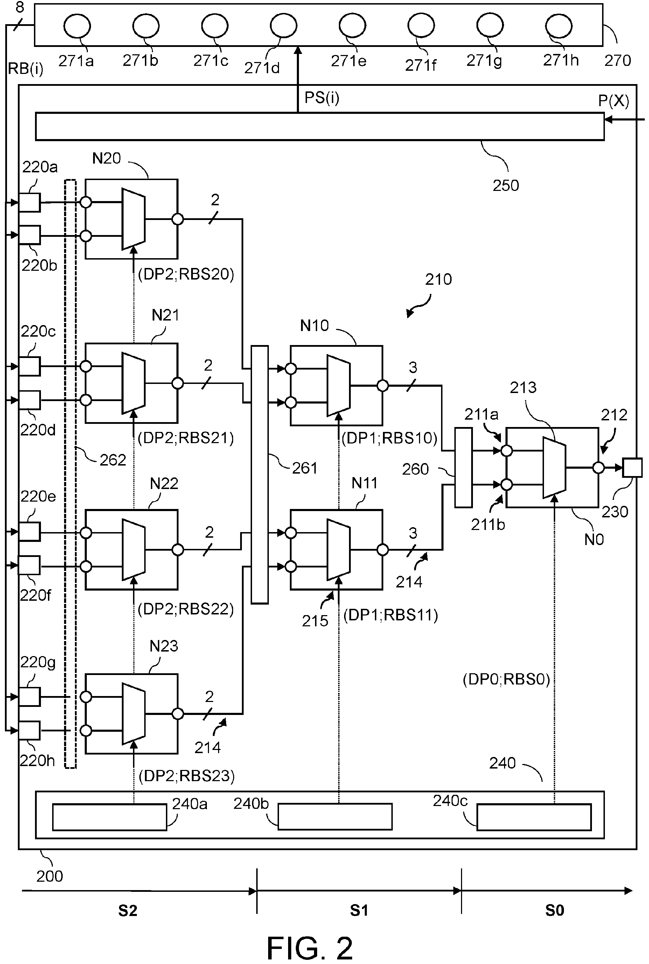

FIG. 2 is a block diagram of a sampling device 200 in accordance with embodiments of the invention. The sampling device 200 comprises input terminals 220a-h, an output terminal 230, a programming unit 250, a detection logic circuit 240, and a binary selection tree structure 210 interposed between the input terminals 220a-h and the output terminal 230.

The binary selection tree structure 210 comprises a plurality of (tree) nodes which are arranged at different depth levels of the selection tree 210. In embodiments of the invention, each tree node has a pair of input terminals 211a-b, an output terminal 212 and a selector circuit 213 connected between the input terminals and the output terminal. Each tree node further includes a control terminal 215 for receiving select signals (DP; RBS) that control the operation of the selector circuit 213.

Among the nodes of the selection tree, the root node is the only node that has no parent node, whereas leaf nodes are tree nodes that have no child nodes. In embodiments of the invention, the root node acts as an output node of the binary selection tree and the leaf nodes act as input nodes. The depth level to which a node of the selection tree belongs is also referred to depth stage and is determined by the number of edges that connect the node to the root node of the selection tree. The root node N0 therefore has a depth d = 0 and belongs to the depth stage S0, the internal nodes N10 and N11 each have a depth d = 1 and belong to the depth stage S1, and the leaf nodes N20, N21, N22 and N23 each have a depth d = 2 and belong to the depth stage S2. In the binary selection tree structure 210, each child node is connected to its parent node by an edge connection 214. More precisely, the output terminal 222 of each child node is connected to the respective input terminal 221a or 221b of the parent node, depending on the position of the child node relative to the parent node. Here, the first child node of the parent node is defined to have a position or address '0' and the second child node is defined to have a position or address '1'. A single position index bit is thus sufficient to indicate the child node position relative to the parent node and also identify the child node for a given parent node. Ancestor nodes of a particular tree node refer to nodes of smaller depths that can be reached from the tree node via more than just a single edge. Child nodes and parent nodes therefore belong to subsequent depth stages of the selection tree. Although the binary selection tree structure of the present embodiment has exactly eight leaf nodes, other embodiments of the invention may have a different or much larger number of leaf nodes, e.g. more than one hundred, e.g. more than one thousand leaf nodes. The number of leaf nodes in a perfect binary selection tree structure is always a power of two.

During the operation of the sampling device 200, child nodes dispatch output signals to their parent nodes, which may be relayed by synchronized or clocked hardware registers 260, 261 between the different depth stages of the binary selection tree structure. The relayed output signals constitute the input signals of the parent nodes of the subsequent depth stage. Leaf nodes receive pairs of random bits from a p-bit array 270 as input signals. The relayed output signals with respect to each depth stage of the binary selection tree structure comprises an output bit as a first signal component and an indexing bit sequence as a second signal component. The output bit represents one of the random input bits RB(i) that has been repeatedly selected/accepted in all the preceding depth stages, whereas the indexing bit sequence is a record of the relative positions of the child nodes of all the preceding depth stages through which the repeatedly selected/accepted random input bits RB(i) has passed so far. The indexing bit sequence is thus extended by one position indexing bit (e.g. address bit of the selected child node) at every depth stage of the binary selection tree, but reduces to a single position indexing bit for the depth stage containing the leaf nodes. Hence, a bit-width of the relayed output signals and the related edge connections between subsequent depth stages increases by one bit at every depth stage of the binary selection tree. For a perfect binary selection tree of height 'h', in which there are 2^h leaf nodes, 2^(h+1)-1 tree nodes in total and h+1 depth stages, the bit-widths 'BW' of the relayed output signals and the transmission wires of the related edge connections are BW = 2, 3, ..., 2+h for depth stages S = h, h-1, ..., 0 respectively. In some embodiments of the invention, only the final indexing bit sequence is provided at the output terminal 212 of the root node, because the output bit always being equal to a logical '1' state does not constitute useful information. In such embodiments, the bit-widths of the output signal and the related output wire of the root node of depth stage S = 0 = S0 is BW = 2+h-1 instead of BW = 2+h.

A clock signal for clocked hardware registers may be generated by a global timing control unit of the sampling device, which ensures that each depth stage has finished calculating the output signals and is ready to receive new input signals (e.g. preventing depth stages from stalling). Synchronization between the different depth stages may also be achieved by hardware registers that comprise suitable data status signaling logic between the subsequent depth stages, e.g. data available and data received signals. This has the advantage that the different depth stages of the binary selection tree structure can be operated as stages of a multi-stage processing pipeline. This increases the sampling device throughput and avoids long settling delays or race conditions that may occur in a purely combinatorial selection tree circuit. Random input bits RB(i) are optionally also buffered by a hardware register 262 at the input terminals 220a-h of the sampling device 200, prior to applying them pairwise to the input terminals pairs 211a-b of the different leaf nodes. This may compensate for possible differences in the signal delays of the random bit sequences RB(i), thereby ensuring that a complete input bit pair is available for each leaf node before processing by the selector circuit 213 begins. In this case, the input terminals 220a-h of the sampling device 200 are coupled through the hardware register 262 to the input terminals pairs 211a-b of the different leaf nodes. In the absence of the hardware register 262, the input terminals 220a-h of the sampling device 200 are directly coupled to or identical with the input terminals pairs 211a-b of the different leaf nodes. In alternative embodiments of the invention, output signals from child nodes may be temporarily retained in a buffer element or flip-flop that is coupled to the child node output terminal, or are placed onto a buffered delay line.

The sampling device 200 further comprises a detection logic circuit 240, which may be assembled from a set of independent detection unit 240a-c, wherein each depth stage S2-S0 of the binary selection tree structure 210 is associated with one of the detection units 240a-c. The detection logic circuit 240 is coupled to the input terminals of all tree nodes belonging to the same depth stage of the binary selection tree and configured to detect a tie situation among the input bit pairs that are applied the input terminals of the tree nodes belonging to the same depth stage. A tie condition or tie situation with respect to a depth stage of the binary selection tree structure is defined as the existence of at least one input bit pair among the input bit pairs applied the input terminals of the tree nodes belonging to that depth stage, of which the bit values both represent a logical '1' state ('TRUE' state). In other words, there is a tie condition for depth stage 'm' if at least one of the input bit pairs $(RB_{m,2j} ; RB_{m,2j+1})$ for nodes j = 0, ..., m-1 of depth stage 'm' is equal to (1; 1). For instance, detection unit 240a is coupled to the input terminals of all leaf nodes of depth stage S2 of the binary selection tree 210 to detect a tie condition among the input bit pairs that are applied to the leaf nodes of depth stage S2, detection unit 240b is coupled to the input terminals of all internal nodes of depth stage S1 of the binary selection tree 210 to detect a tie condition among the input bit pairs that are applied to the internal nodes of depth stage S1, and detection unit 240c is coupled to the input terminals of the root node of depth stage S0 of the binary selection tree 210 to detect a tie condition among the input bit pair that is applied to the root nodes of depth stage S0.

For each tree node, the selector circuit 213 is configured to determine which one of the two input signals is accepted, based on the select signal present at the control terminal 215, identifies the child node of which the input signal is accepted, propagate the first signal component received from the identified child node from the corresponding input terminal to the output terminal of the node, propagate the second signal component received from the identified child node from the corresponding input terminal to the output terminal, and supply the position index bit for the identified child node at the output terminal. For leaf nodes only, the input terminal of the sampling device that is connected to the input terminal of the leaf node plays the role of a child node and is considered to be equal to a child node for the purpose of calculating the outcomes of the selector circuit. The propagated first signal component at the output terminal of the node constitutes the first signal component of the output signal of the node. In some embodiments of the invention, the selector circuit is configured to construct an extended indexing bit sequence by inserting the position index bit for the identified child node as the most significant bit (MSB) into the indexing bit sequence being the second signal component received from the identified child node. In other embodiments of the invention, an index register is associated with each tree node and coupled to the output terminal of the node, and the index register is configured to receive the propagated second signal component and the supplied position index bit for the identified child node from the output terminal of the node and construct the extended indexing bit sequence by inserting the received position index bit as the most significant bit (MSB) into the indexing bit sequence being the propagated and received second signal component. The index register may be part of the hardware register arranged between subsequent depth stages of the binary selection tree structure. For all practical purposes of the invention, the extended indexing bit sequence is considered to be the definite second signal component of the output signal of the tree node.

In embodiments of the invention, the selector circuit 213 may be a combinatorial circuit. As explained further below, the selector circuit may determine which one of the two input signals is accepted, based on the following selection rules/input scenarios:

$$IND = DP*RBS + INP1*NOT(DP),$$

and

$$OUT = INP0*(NOT(DP) + DP*NOT(RBS)) + INP1*(NOT(DP) + DP*RBS),$$

wherein the indicator bit 'DP' of the first select signal designates the existence or absence of a tie condition for the depth stage that contains the selector circuit, the auxiliary random bit of the second select signal is designated as 'RBS', the position index bit supplied at the output terminal of the tree node containing the selector circuit is designated as 'IND', and the pair of input bits are designated as 'INP0' and 'INP1', wherein 'INP0' stems from the child node at relative positions '0' and 'INP1' stems from the child node with relative position '1'. Here, child node has to be replaced by input terminal of the sampling device for leaf nodes. Moreover, a signal mean value <RBS> of a sequence of random bits RBS is <RBSW> = 0.5, and "+" and "*" designate the bitwise OR and the bitwise AND operation, respectively.

In embodiments of the invention, each tree node receives a pair of input signals and supplies an output signal. For non-leaf nodes, each input signal comprises a signal bit - also referred to as sampled random bit or Bernoulli trial outcome bit - as a first signal component and an indexing bit sequence as a second signal component. For the leaf nodes, the indexing bit sequence is an empty sequence. The selector circuit of each tree node is configured to accept one of two input signals as part of the node output signal, and reject the other one of the two input signals, wherein the decision to accept or reject an input signal of the pair of input signals depends on the select signals present at the control terminal of the selector circuit. The accepted input signal progresses to the output terminal of the tree node. Hence, the output signal of tree nodes also comprises a signal bit as first signal component and an indexing bit sequence as second signal component. The selector circuit is further configured to determine the position index bit that identifies the input terminal of the tree node, and for non-leaf nodes also the connected child node, where the accepted input signal is currently applied. The selector circuit is further configured to send the determined position index bit as part of the output signal to the output terminal of the tree node, where the position index bit is concatenated with the second signal component of the accepted input signal to obtain an updated second signal component of the output signal. The output signal of a leaf node therefore has a second signal component that contains a single position index bit and is not empty. Moreover, the updating of the second signal component results in an extended indexing bit sequence the bit-width of which increases with every depth stage of the binary selection tree.

In embodiments of the invention, the selector circuit of each tree node may be configured to randomly decide the input signal that is to be accepted if the detection logic circuit detects a tie for the depth stage to which the tree node belongs. A tie condition is indicated by a first one of at least two select signals for the selector circuit (e.g. 'DP' hereinabove), whereas a second one of the at least two select signals for the selector circuit (e.g. 'RBS' hereinabove) provides an auxiliary random bit that forms the basis for the aforementioned random decision as to which input signal is accepted. In the absence of a tie condition, the selector circuit of each tree node may be further be configured to accept the input signal of which the signal bit (i.e. first signal component) represents a logical '1' state, or else accept one of the two input signals by default (e.g. either always first input signal or always second input signal) if the signal bits of both input signals represent logical '0' states. Th latter case corresponds to a don't care situation, because signals transmitted over edge connections between tree nodes that contain zero-value signal bits are ultimately rejected by tree nodes of subsequent depth stages of the binary selection tree.

The programming unit 250 of the sampling device 200 is operatively connectible to a plurality of programmable probabilistic bit generators 271a-h that form a programmable p-bit array 270. Moreover, the programming unit 250 is configured to generate a plurality of programming signals PS(i) for setting a statistical expectation <RB(i)> of probabilistic bits RB(i) generated by each one of the probabilistic bit generators 271a through 271h. The plurality of programming signals PS(i) is generated in accordance with the probability mass function P(X) that is associated with the discrete random variable of interest, X. Therefore, rapidly fluctuating probabilistic bits RB(i) generated by each one of the probabilistic bit generators 271a through 271h satisfy the statistical relationship <RB(i)> = P(X = Xi), where Xi relates to one of the discretization intervals/bins indicative of a value of the random variable X.

Individual probabilistic bits RB(i) may be fired on command or sampled at regular time intervals, e.g. at each clock cycle of the sampling device 200, and are delivered to the respective input terminals 220a-h of the sampling device. For instance, the first random bit RB(0) is applied to the first input terminal 220a, the second random bit RB(1) is applied to the second input terminal 220b, and so forth. In consequence, there is a one-to-one relationship between random bit sequences RB(i) and input terminals 220a-h of the sampling device, and also between probabilistic bit generators 271a-h and input terminals 220a-h of the sampling device. This one-to-one relationship extends to the input terminals of the leaf nodes, which are connected one by one to the respective input terminals of the sampling device. Furthermore, the random input bits are applied pairwise to the input terminals 211a, 211b of the different leaf nodes. For instance, random input bits RB(0) and RB(1) are arranged into a first input bit pair that is applied to the respective input terminals of the first leaf node N20, random input bits RB(2) and RB(3) are arranged into a second input bit pair that is applied to the respective input terminals of the second leaf node N21, and so forth.

In some embodiments of the invention, the programmable p-bit array 270 may comprise an additional set of programmable probabilistic bit generators that are responsible for the generation of the auxiliary random bit signals RBS(i) as the second one of the at least two select signals for the selector circuits. Much like the probabilistic bits RB(i), the auxiliary random bit signals RBS(i) may be fired on command or sampled at regular time intervals , e.g. at each clock cycle of the sampling device 200. The probabilistic bits, RB(i), and the auxiliary random bit signals, RBS(i), may be generated at the same moments in time. In alternative embodiments of the invention, other sources for random or pseudorandom number generation, different from the p-bit array 270, may be used to obtain a set independent auxiliary random bit signals RBS(i).

In embodiments of the invention, the hardware sampling device is compatible with programmable p-bit arrays, e.g. arrays of programmable probabilistic bit generators or programmable/reconfigurable pseudorandom number generators such as LFSBs, and can be used in combination with p-bit arrays to efficiently generate random numbers in accordance with arbitrary probability distributions. In particular embodiments of the invention, the sampling device comprises the p-bit array as a further hardware component.

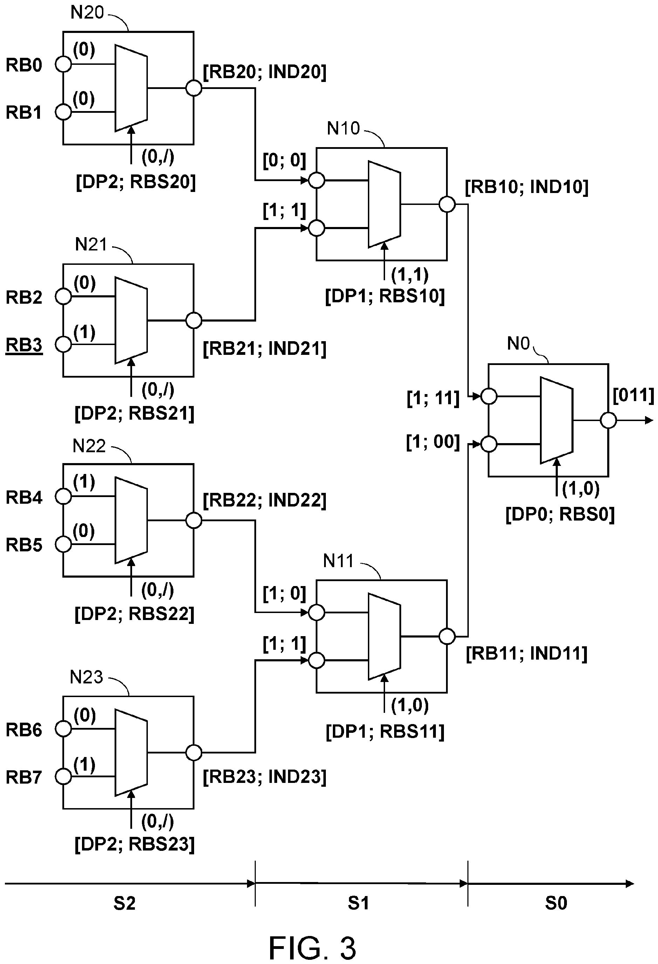

With reference to FIG. 3, the selection process and the flow of information within the binary selection tree structure is now explained in more detail for a binary selection tree structure of size seven, e.g. the selection tree comprises seven nodes in total that are distributed over three depth stages S2, S1 and S0. The example can be easily generalized to larger selection trees. At depth stage S2, the binary selection tree of the present example comprises four leaf nodes N20, N21, N22 and N23, which receive respective bit pairs (RB0 = 0; RB1 = 0), (RB2 = 0; RB3 = 1), (RB4 = 1; RB5 = 0) and (RB6 = 0; RB7 = 1) as inputs. Here, the input bits RB0 through RB7 relate to bits of a random bit sequence generated by a corresponding number of probabilistic bit generators or pseudorandom number generators (e.g. LFSR) that have been previously programmed by the programming unit of the sampling device. None of the input bit pairs at depth stage S2 is a tie. Therefore, the detection logic circuit issues the select signal DP2 = 0 to the selector circuits of the four leaf nodes and the auxiliary random bit signals RBS20, RBS21, RBS22 and RBS23 can be ignored. As explained further below in more detail, the selector circuits of the leaf nodes each calculate an output bit and a position index bit as OUT = OR(INP0, INP1) and IND = INP1. This results in the four output bits RB20 = 0, RB21 = 1, RB22 = 1 and RB23 = 1 for the four leaf nodes, as well as in position index bits IND20 = 0, IND21 = 1, IND22 = 0 and IND23 = 1. The combined output bit and index position bit information at the output terminal of each leaf node then progresses to the input terminal of the corresponding parent node in depth stage S1, e.g. are relayed by synchronized hardware registers (not shown) between the respective depth stages of the binary selection tree. At depth stage S1, the binary selection tree of the present example comprises two internal nodes N10 and N11. The input bit pair (RB22; RB23) for node N11 represents a tie situation, e.g. both input bits are logical '1' states. Therefore, the detection logic circuit issues the select signal DP1 = 1 to the selector circuits of the two nodes N10, N11 in combination with the respective auxiliary random bit signal RBS10 = 1 and RBS11 = 0. The auxiliary random bits may be generated on demand by probabilistic bit generators of the p-bit array that is programmed by the programming unit of the sampling device, may be generated on demand by a separate probabilistic bit generator or pseudorandom number generator, or else a continuous sequence of p-bits/random bits is sampled at a request point in time. The auxiliary random bits are generated with mean value <RBS10> = <RBS11> = 0.5. As explained further below in more detail, in the event of a tie, the selector circuits of the internal nodes N10, N11 each calculate an output bit and a position index bit as OUT = INP0*NOT(RBS) + INP1*RBS and POSIND = RBS. This gives rise to the two output bits RB10 = 1 and RB11 = 1, as well as the two corresponding position index bits POSIND10 = 1 and POSIND11 = 0. The position index bit IND21 dispatched by the child node N21 of the previous depth stage S2 is referenced by the position index bit POSIND10 of the current stage S1 and therefore appended to the currently calculated position index bit POSIND10 in node N10, thus obtaining an extended indexing bit sequence IND10 :=[POSIND10; IND21] = [11]. In other words, the currently calculated position index bit POSIND0 of depth stage S1 is inserted as the most significant bit (MSB) into the previously determined indexing bit sequence IND21 for the child node N21 of the previous depth stage S2 that is addressed/referred to by the of currently calculated position index bit POSIND0 of depth stage S1. This deterministic rule generally applies to all the nodes at all the depth stages of the binary selection tree, except for the leaf nodes. In consequence, the position index bit IND22 dispatched by the child node N22 of the previous depth stage S2 is referenced by the position index bit POSIND11 of the current stage S1 and therefore appended to the currently calculated position index bit POSIND11 in node N11, thus obtaining an extended indexing bit sequence IND11 :=[POSIND11; IND22] = [00]. The combined output bit and index bit sequence information at the output terminal of each internal node of depth stage S1 then progresses to the input terminal of the corresponding parent node in depth stage S0, e.g. are relayed by synchronized hardware registers between the respective depth stages of the binary selection tree. At depth stage S0, the binary selection tree of the present example comprises one root node N0. The input bit pair (RB10; RB11) for node N0 represents a tie situation, e.g. both input bits are logical '1' states. Therefore, the detection logic circuit issues the select signal DP0 = 1 to the selector circuit of the root node N0, in conjunction with the respective auxiliary random bit signal RBS0 = 0. Again, the auxiliary random bits are generated with mean value <RBS0> = 0.5, as are all auxiliary random bit signals in the binary selection tree. The selector circuits of the root node N0 calculates a position index bit as POSIND = RBS. This gives rise to the position index bits POSIND0 = 0. The selector circuits of the root node N0 may additionally calculate an output bit as OUT = INP0*NOT(RBS) + INP1*RBS, but this result is always '1' for the root node of a binary selection tree and is not needed. The indexing bit sequence IND10 dispatched by the child node N10 of the previous depth stage S1 is referenced by the position index bit POSIND0 of the current stage S0 and therefore appended to the currently calculated position index bit POSIND0 in the root node N0, thus obtaining the extended indexing bit sequence IND0 :=[POSIND0; IND10] = [011]. This indexing bit sequence IND0 is also the final indexing bit sequence that is determined by the binary selection tree structure of FIG. 3. It is therefore sent to an output terminal of the sampling device. The definite sample that is generated by the root node N0 for the probability distribution of interest corresponds to the discretization bin labelled as or referenced by the index IND0 = $[011]_2$ in binary representation and IND0 = $[3]_{10}$ in decimal representation. This also corresponds to the successful Bernoulli trial as indicated by the fourth input bit RB3 = 1. In embodiments of the invention, the different depth stages of the binary selection tree structure can be organized and executed as a pipeline. That is, the depth stage of the tree that contains the leaf nodes may accept and operate on new set of input bit pairs while the remainder of the stages is still busy processing the hierarchical selections and building the extended indexing bit sequence with respect to the preceding set of input bit pairs.

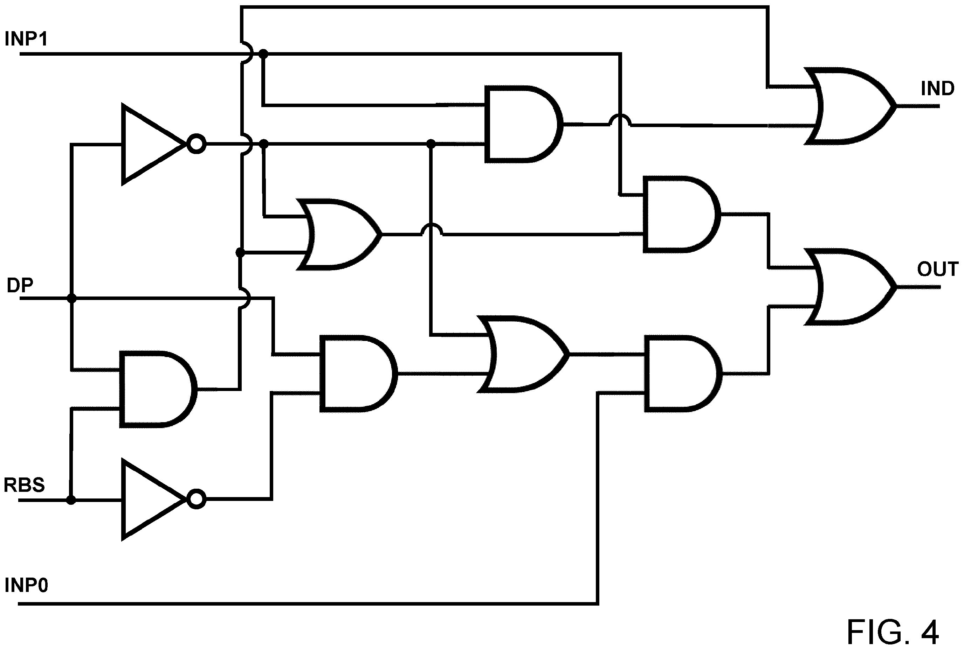

FIG. 4 shows the circuit diagram of an exemplary selector circuit that can be used in embodiments of the invention. Each node of the binary selection tree structure comprises a selector circuit. The selector circuit is configured to select one of the two input bits INP0, INP1 that is admitted to the selector circuit output, e.g. propagates to the output 'OUT', based on the two select signals 'DP' and 'RBS'. The select signals 'DP' and 'RBS' determine the bit-operations that are performed on the input bits INP0, INP1, in order to single out one of the two input bits. Likewise, the selector circuit is configured to output the position index bit 'IND' with respect to the selected input bit, e.g. position index bit '0' if the first input but INP0 is admitted to the selector circuit output 'OUT' and position index bit '1' if the second input bit INP1 progresses to the selector circuit output 'OUT'. The position index bit 'IND' supplied by the selector circuit is thereafter inserted into the selected bit indexing sequence from the previous depth stage, e.g. inserted as the most significant bit (MSB), and passed on to the next depth stage. However, the position index insertion may be carried out by a dedicated index register of the tree node or an index register that is part of the hardware registers between the subsequent depth stages of the binary selection tree, rather than by the selector circuit of the tree node.

The first select signal 'DP' indicates the presence or absence of a tie condition in the depth stage where the selector circuit is located, while the second select signal 'RBS' designates an auxiliary random bit of a random bit sequence with mean value <RBS> = 0.5, i.e., RBS takes the values '0' and '1' with equal probability. The second select signal 'RBS' is only required if the first select signal 'DP' is 'TRUE/1' and may be ignored/disabled otherwise. As can be inferred from the circuit diagram of FIG. 4, the value of the output bit at the selector circuit output 'OUT' is governed by the following general expression:

$$OUT = INP0*(NOT(DP) + DP*NOT(RBS)) + INP1*(NOT(DP) + DP*RBS),$$

wherein "+" and "*" designate the bitwise OR and the bitwise AND operation, respectively. It is easily verified that in the event of a detected tie condition (i.e., DP = 1), the previous expression simplifies to: OUT = INP0*NOT(RBS) + INP1*RBS. Depending on the precise value of the auxiliary random bit 'RBS', the value of the output bit is either equal to INP0 or INP1. Therefore, in situation in which a tie has been detected for the depth stage in which the selector circuit is located, each input bit of the input bit pair INP0, INP1 has a 50% chance of progressing to the selector circuit output. Furthermore, the value of the position index bit 'IND' at the selector circuit output is governed by the following general expression:

$$IND = DP*RBS + INP1*NOT(DP).$$

This expression simplifies to IND = RBS in the case of a detected tie condition, confirming that the precise value auxiliary random bit 'RBS' not only randomly selects one of the input bits but also indicates the relative position (address) of the selected input bit as seen by the selector circuit. Indeed, selecting among two successful Bernoulli trials with respect to two different discretization bins should not be biased towards one of the bins but happen with equal probability.

On the other hand, the absence of a tie (i.e. DP = 0) leads to the following simplified expressions for the output Bi and the position index bit:

$$OUT = INP0 + INP1 \text{ and } IND = INP1.$$

This means that the value of the output bit is determined by the bitwise OR operation on the two input bits, whereas the position index bit is given by the value of the second input bit INP 1. This covers the following three cases: (i) INP0 = 1, INP1 = 0, IND = 0, (ii) INP0 = 0, INP1 = 1, IND = 1, (iii) INP0 = INP1 = 0, IND = 0. Indeed, a successful Bernoulli trial with respect to one of the bins equates to an input bit that is one that should prevail over an unsuccessful Bernoulli trial with respect to another bin. If both Bernoulli trials are unsuccessful, it does not matter which one is selected, because it will be ultimately discarded in one of the subsequent stages of the binary selection tree. One may then decide to select the first input bit INP0 by default, by ensuring that IND = 0 in case (iii). Of course, one may also do the opposite by default, i.e. setting IND = NOT(INP0) such IND = 1 always holds by default in case (iii). It is noted that the case of INP0 = INP1 = 1 is not included here, as this corresponds to a tie situation.

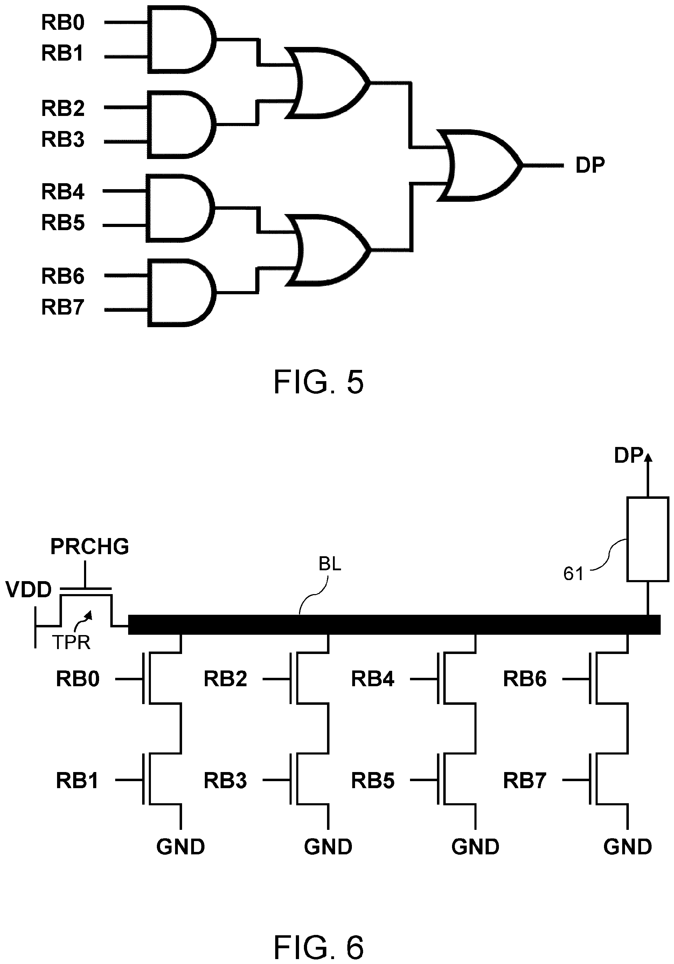

In embodiments of the invention, the detection logic circuit for detecting ties among a plurality of input bit pairs may comprise a separate detection unit at each depth stage of the binary selection tree structure. The separate detection units associated with the different depth stages are preferably operating in parallel, whereby a processing latency related to each depth stage can be kept small. The separate detection units of the detection logic circuit may be implemented in various ways. A first way of implementing the detection unit related to a level-three depth stage of the binary selection tree structure is shown in the circuit diagram of FIG. 5. A level-three depth stage comprises four internal tree nodes and receives eight random bits RB0-RB7 as inputs, wherein the random input bits are supplied pairwise to the corresponding tree node, e.g. a first pair is formed by input bits RB0 and RB1 with respect to the first node of the third depth stage, a second pair is formed by input bits RB2 and RB3 with respect to the second node of the third depth stage, and so forth. The input bits of each pair are fed into a logical AND gate to detect whether the two bits of the pair both have a '1' logical state. The outputs from the AND gates are then subjected to a cascade of logical OR gates, which form a multi-input OR gate. The resulting output 'DP' from the multi-input OR gate is 'TRUE' if any of the four input bit pairs represents a tie condition, i.e. the two bits of the pair both have a '1' logical state. Otherwise, the resulting output 'DP' from the multi-input OR gate is 'FALSE', indicating that no tie condition has been detected at this depth stage. A second way of implementing the detection unit related to a level-three depth stage of the binary selection tree structure is shown in the circuit diagram of FIG. 6. Therein, pairs of series-connected field-effect transistors function as logical AND gates with respect to input bit pairs. A first transistor of each transistor pair has a source terminal connected to ground and a drain terminal connected to the source terminal of the second transistor of the transistor pair. A drain terminal of the second transistor of each transistor pair is connected to a common bit line 'BL'. The input bits are applied to the control gates of the transistors. The bit line can be pre-charged through a separate transistor, TPR, which operatively couples the bit line 'BL' to a supply voltage 'VDD' when a pre-charge signal is applied to the control gate of transistor 'TPR'. The pre-charged bit line only discharges if both bits associated with at least one of the tree nodes at the third depth stage have a logical state equal to '1'. A readout circuit 61 detects the bit line voltage, in particular detects voltage changes due to a discharge event. Therefore, a readout signal 'DP' is indicative of a tie condition among the plurality of input bit pairs RB0/RB1, RB2/RB3, RB4/RB5, and RB6/RB7.

In alternative embodiments of the invention, a single detection logic circuit is provided for the entire binary selection tree structure, e.g. is shared by all depth stages. In such embodiments, the single detection logic circuit is configured to detecting ties among the plurality of input bit pairs of each depth stage of the binary selection tree structure in a sequential manner. In yet other embodiments of the invention, the detection logic circuit for detecting ties among a plurality of input bit pairs comprises separate detection units, but several depth stages of the binary selection tree structure share the same detection unit.

In embodiments of the invention, the random bits that are inputs to the leaf nodes of the binary selection tree structure may be paired purposefully, for instance by pairing random bits whose logical state is always zero. This may require a reordering of the discretization bins or possible values of the random variable, which can be stored by the programming unit of the sampling device, or by an auxiliary index mapping unit, as an index permutation with respect to the indices used for designating bins. The accepted index that is output by the root node of the binary selection tree structure can then be remapped by the programming unit or the auxiliary index mapping unit, by applying the inverse of the stored index permutation to the accepted index that is output by the root node. The programming unit may be configured to detect probabilities of the arbitrary probability distribution that are equal to zero and re-arrange the bin indices accordingly such that the logical states of random bits that are inputs to one or more adjacent leaf nodes are always zero. In practice, the results in programming signal that force adjacent probabilistic bit generators of a p-bit array to output bits whose logical states are always zero, or which simply disables the probabilistic bit generators. Alternatively, a interconnection network between the p-bit array and the leaf nodes of the binary selection tree structure may be reconfigured in accordance with the index stored permutation to obtain the pairing of zero random bit inputs for the one or more adjacent leaf nodes. Pairs of zero random bit inputs may occur in embodiments of the invention in which less discretization bins have been used than there are available probabilistic bit generators in the p-bit array. The adjacent leaf nodes of the binary selection tree structure that receive the pairs of zero random bit as inputs can then be inactivated, since there outputs will never make a contribution to the accepted index at the root node. Likewise, ancestor nodes at subsequent lower depth stages of the binary selection tree structure that entirely depend on the output of inactivated nodes may also be inactivated. This has the advantage of saving power during the sampling process. Ancestor nodes at subsequent depth stages of the binary selection tree structure that partly depend on the output of inactivated nodes, e.g. only one of the parent's child nodes is inactivated, may have the corresponding input connector receiving zero bits only, e.g. by connecting a ground voltage level as input signal to the input connector that is usually linked to the inactivated child node. The special case of deactivating half of the leaf nodes as well as all ancestor nodes whose inputs entirely depend on the outputs of deactivated nodes results in a tree halving operation that is described further below.

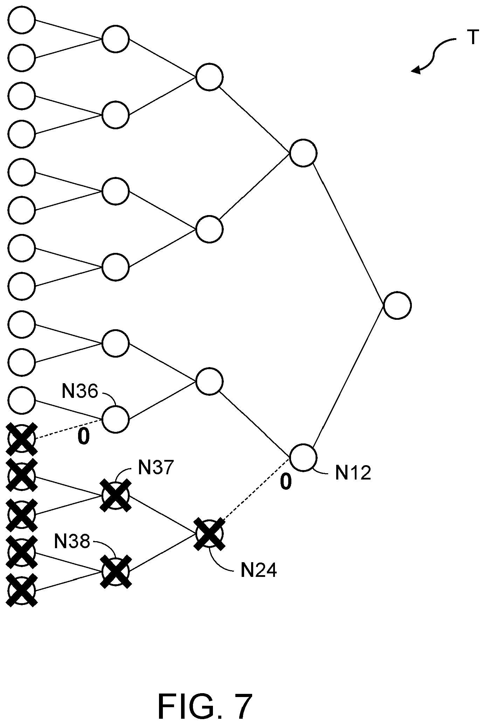

In the example of FIG. 7, the last five leaf nodes out of sixteen leaf nodes in a five-stage selection tree structure are inactive, e.g. have been deactivated by the programming unit or a control unit in view of zero random bit inputs. Moreover, ancestor nodes N37, N38 and N24 have also deactivated, since their inputs depend entirely on the outputs from inactive nodes, i.e., all paths to leaf nodes starting from the ancestor nodes N37, N38 and N24 involve inactivated nodes. Contrarily, ancestor nodes N36 and N12 partly depend on the outputs from inactive nodes, i.e., not all paths to leaf nodes starting from the ancestor nodes N36 and N12 involve inactive nodes. Therefore, ancestor nodes N36 and N12 are not deactivated, but a control unit or the programming unit may be configured to temporarily disable their edge connections to inactive child nodes and connect the corresponding input terminals of ancestor nodes N36 and N12 to the ground voltage level, thus ensuring all-zeroes inputs to the ancestor nodes N36 and N12 with respect to edge connections to inactive child nodes.

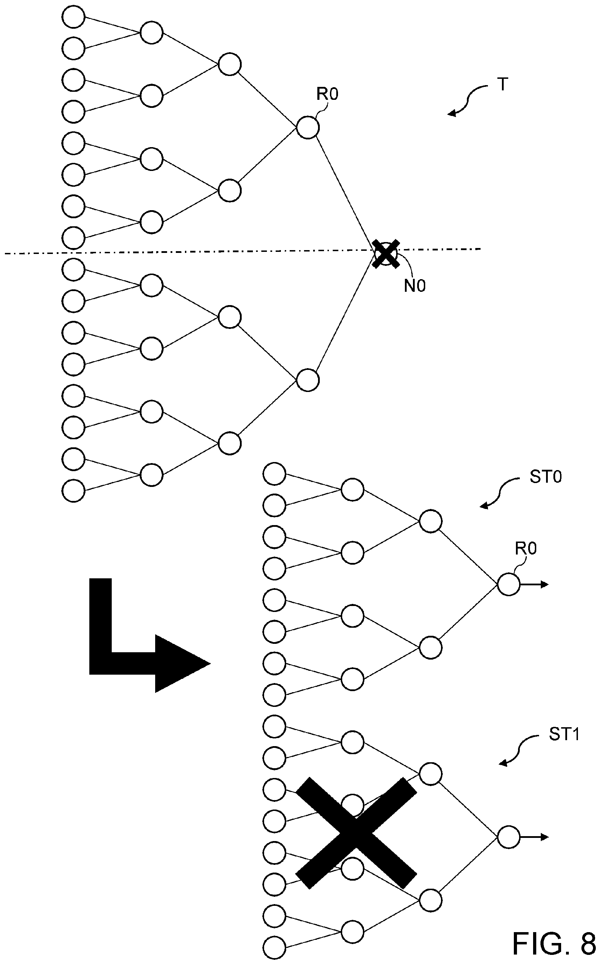

Referring briefly to FIG. 8, reconfiguration steps of a subtree selection process for a perfect binary selection tree 'T' of height H = 4. In the present example, a smaller subtree 'STO' of height Hsub = 3 is selected, in which the new root node of the smaller subtree corresponds to a child node of the original root node. As a first step, the node 'RO' of the subtree 'STO' is determined as the new root node and all ancestor nodes relative to this new root node 'RO' are deactivated. In the present example, only the previous root node 'NO' is deactivated, thus effectively resulting in a halving of the original binary selection tree structure 'T'. In a subsequent step, the new root node 'RO' of the selected subtree is configured as an output node, meaning that indices for generated samples of the target distribution are obtained from the new root node 'RO' instead of the previous root node 'NO'. This may include rerouting or operatively coupling the outputs of node 'RO' toward a global output of the sampling device. Furthermore, the second subtree 'ST1', whose root node corresponds to the other child node of the original root node 'NO', may be deactivated. This has the advantage of saving power if the target distribution is sampled at a lower precision, since less discretization bins are then required for sampling the target distribution. For instance, only half of the overall available discretization bins are needed when sampling the distribution at interest with one bit less (i.e., one bit less is needed when labelling the discretization bins by binary numerals). A lower precision sampling for the distribution of interest may be advantageous in situations where the distribution of interest is symmetric, e.g. Gaussian distributions. Indeed, it is sufficient to obtain samples only from one half of a symmetric distribution of interest with a reduced level of precision (e.g. one bit less of precision) and recover the full level of precision with respect to the entire symmetric distribution of interest by randomly re-assigning the obtained samples to either one of the two halves in a subsequent step. Alternatively, it is possible to obtain samples only from one half of the symmetric distribution of interest with the full predetermined level of precision and then increase the level of sampling precision by one bit with respect to the entire symmetric distribution of interest, by randomly re-assigning the obtained samples to either one of the two halves in a subsequent step. In alternative embodiments of the invention, the second subtree 'ST1' is not deactivated and both subtrees 'STO' and 'ST1' are selected as independently operating binary selection trees of reduced height. This has the advantage of increasing the throughput as there are now two samples from the distribution of interest that are generated (at lower than maximum precision) by the sampling device at each clock cycle.

However, subtree selection processes may be carried out in embodiments of the invention in which the difference in height between the original binary selection tree structure and the binary subtree structure, H-Hsub, is larger than one, e.g. H-Hsub > 1. In such cases, the (new) root node of the selected subtree is not a child node of the original root node, but an internal node of the binary selection tree structure that has a depth larger than one. Typically, all ancestor nodes of the root node of the selected subtree are then deactivated. As mentioned previously, multiple subtrees can be selected at the same time to operate in parallel. For instance, all 2^d nodes of the original binary selection tree structure that have the same depth 'd' may be chosen as the new root nodes of 2^d independent, parallelly operable subtrees, while ancestor nodes having depths smaller than 'd' are deactivated. In embodiments of the invention, the one or multiple selected subtrees preferably is a perfect binary selection tree.

In embodiments of the invention, the reconfiguration operations with regard to an initial, reconfigurable binary selection tree structure, in particular subtree selection or tree halving, may be directed by a control unit of the sampling device. The control unit is then configured to determine the nodes of one or multiple desired subtrees of the initial binary selection tree structure, determine the new root nodes with respect to the one or multiple desired subtrees, reconfigure the new root nodes as output nodes (e.g. by rerouting their outputs to a global output of the binary selection tree structure), deactivate the previous root node and optionally deactivate the remaining nodes of the initial binary selection tree structure.

In embodiments of the invention, the reconfiguration operations with regard to an initial, reconfigurable binary selection tree structure may comprise combinations of the previously described subtree selection/deactivation and the deactivation of a limited number of nodes in the selected subtree in view of zero random bit inputs. Moreover, reconfiguration operation performed with respect to the binary selection tree structure may further be combined with embodiments in which a partially or fully reduced representation of the original probability distribution is used. The latter is described in more detail further below.

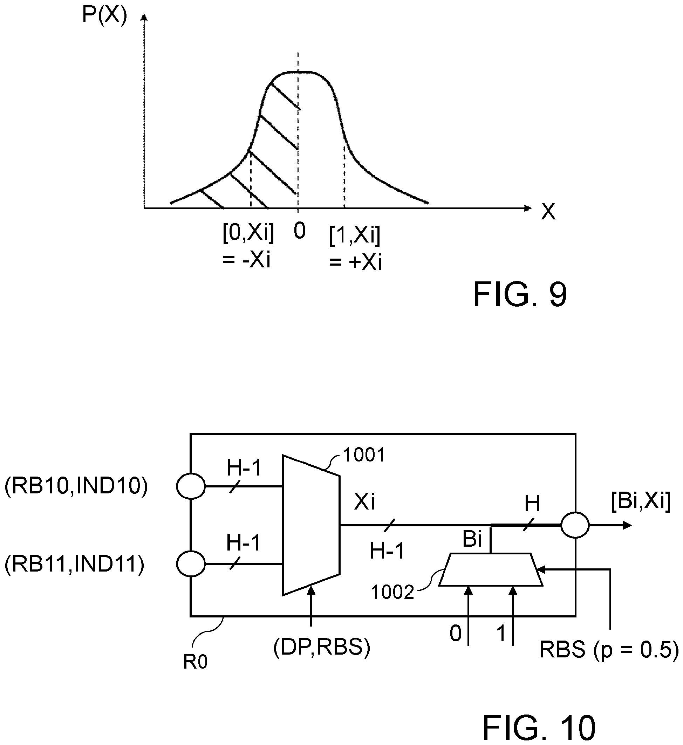

FIG. 9 shows a probability distribution from which samples are to be drawn and which is symmetrically distributed about the point X = 0. Every probability P(X) in the left half of the distribution, e.g. all probabilities P(X) for which X < 0, matches with one of the probabilities in the right half, e.g. all probabilities P(X) for which X > 0, and the following relationship thus holds for each value of the random variable of interest X: P(X) = P(-X). Hence, the information contained in the right half of the probability distribution is redundant in view of the left half. As explained previously, it is thus sufficient to obtain preliminary samples only from the left half of the symmetric probability distribution and subsequently reassign the preliminary samples randomly with equal probability to one of the two halves of the probability distribution, whereby a definite sample from the complete probability distribution is obtained. Moreover, the preliminary sample may be obtained from a half-tree (i.e., subtree selection for which the new root node has a depth d = 1) that is operating at lower precision (e.g., one bit less compared to maximum precision) according to some embodiments of the invention. Hence, the number of probabilistic bit inputs to be applied to the leaf nodes of the binary selection tree structure is reduced by a factor of two.

FIG. 10 shows a variant of a root node of a binary selection tree structure, or a selected subtree thereof, that can be used in a sampling device according to an embodiment which generates observations from a random variable of interest that is symmetrically distributed, e.g. as shown in FIG. 9. The current root node R0, which has a height H-1, receives a first random bit RB10 at its first input terminal and a second random bit R11 at its second input terminal. The two random bits RB10 and RB11 form an input pair of random bits. The first random bit R10 is supplied by the first one of the two child nodes of the root node R0, whereas the second random bit R11 is supplied by the second one of the two child nodes of the root node R0. Additionally, a first indexing bit sequence IND10 of bit width H-2 is received from the first one of the two child nodes of the root node R0 at the first input terminal of the root node R0 and a second indexing bit sequence IND11 of bit width H-2 is received from the second one of the two child nodes of the root node R0 at the second input terminal of the root node R0. Based on the inputs to the root node R0 and the selection signals 'DP' and 'S', the data selection circuit 1001 of the root node R0 determines the extended indexing bit sequence Xi of bit width H-1 at its output. In the present embodiment, the extended indexing bit sequence Xi represents the preliminary sample obtained for one of the two halves of the symmetric probability distribution of interest and is provided as an unsigned sequence, meaning that none of its H-1 bits are used to represent a sign. The root node R0 further contains a symmetry selection circuit 1002, which receives a constant 1-bit and a constant 0-bit as separate data inputs and a random bit signal RBS as selector signal. A mean value 'p' of the random bit signal RBS is set to p = 0.5 such that either one of the two constant data inputs is selected with equal probability as the symmetry indicator bit 'Bi' at the output of the symmetry selection circuit 1002. In the present embodiment, the symmetry indicator bit 'Bi' is used to determine to which half of the complete, symmetric probability distribution the preliminary sample Xi is assigned. Eventually, a definitive sample of the complete, symmetric probability distribution of interest is formed at the output of the root node R0, by inserting the symmetry indicator bit 'Bi' as a sign bit into the extended indexing bit sequence Xi. This results in a signed indexing bit sequence [Bi, Xi] of bit width H as the definite sample. The signed indexing bit sequence [Bi, Xi] refers to and uniquely identifies one of the discretization bins related to the symmetrically distributed random variable and it is in this bin that the definite sample is located.

In alternative embodiments of the invention, in which the index set is not necessarily recentered or the point of symmetry for the probability distribution is different from zero, the symmetry indicator bit 'Bi' may be inserted as the most significant bit (MSB) into an unsigned indexing bit sequence. For instance, the point of symmetry for the probability distribution is x = 0.5 and the x-axis is scaled, e.g. in units of the variance of the probability distribution, such that the entire probability distribution fits into the unit interval (i.e. W in [0, 1]). The symmetry indicator bit 'Bi' is still used to determine to which half of the complete, symmetric probability distribution the preliminary sample Xi is assigned. The definitive sample of the complete, symmetric probability distribution of interest is formed at the output of the root node R0, by inserting the symmetry indicator bit 'Bi' as the MSB into either the extended indexing bit sequence, Xi, or the extended indexing bit sequence, Xibar. Here, 'Xibar' is defined as the one's complement (binary inverse) of the extended indexing bit sequence 'Xi'. More specifically, if Bi = 0, then the extended indexing sequence for insertion of 'Bi' is given by 'Xi', and else if Bi = 1, then the extended indexing sequence for insertion of 'Bi' is given by 'Xibar'. This results in one of the two indexing bit sequences [0, Xi] or [1, Xibar] of bit width H as the definite sample.

The preceding embodiment is specifically adapted for sampling from symmetrical probability distributions. Other embodiments of the invention may be specifically adapted for sampling from probability distributions - symmetric or asymmetric - in which at least one probability value, P(X), occurs multiple times in the probability distribution, e.g. occurs at least two times for two different values X1, X2 of the random variable X and associated probability distribution.

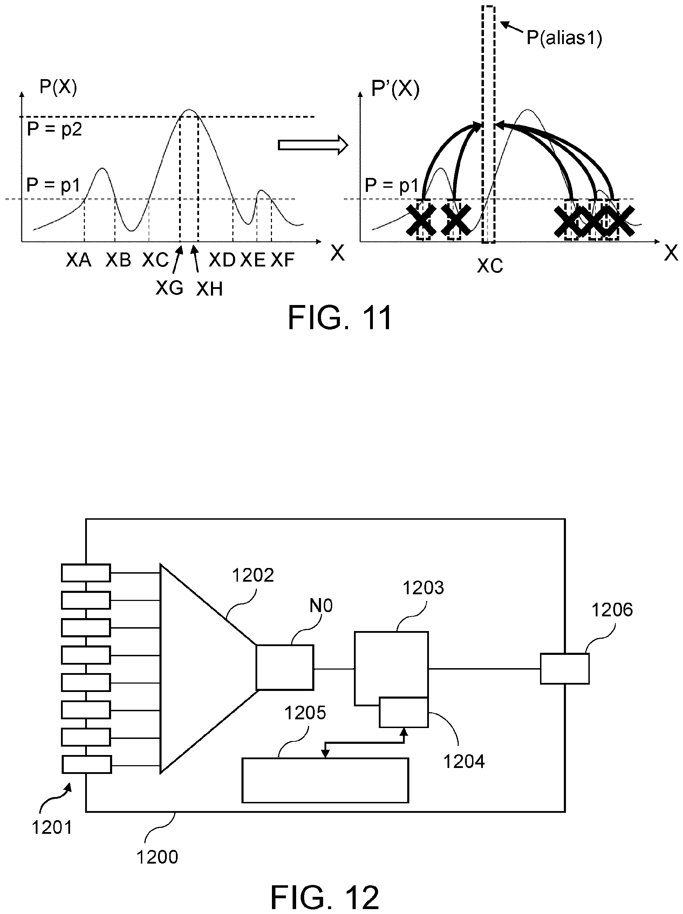

An example of such a probability distribution with many occurrences of probability values is shown in the left diagram of FIG. 11, where six different values XA, XB, ..., XF of the random variable of interest are all associated with the same probability value P = p1. In contrast thereto, only two different values XG and XH of the random variable are associated with the same probability value P = p2. Hence, the number of occurrences may be equal but does not have to be equal for different horizontal slices (slices of constant probability). It may be beneficial to reduce or compress the probability distribution P(X) in such a way that fewer discretization intervals (bins) are required and hence fewer probabilistic or pseudorandom bit generators have to be programmed. A reduced representation P'(X) of the original probability distribution P(X) can be obtained by determining the set of values of the random variable of interest that are associated with the same probability value, i.e. determining the multiple occurrences as the pre-image of the probability density functions/probability mass function at a given probability P(X) = Pi, and associating the multiple occurrences with a unique alias for this probability Pi. An alias typically consists of an allocated discretization bin and a corresponding alias probability value. One of the existing discretization bins related to the multiple occurrences of the probability value Pi may be allocated to the alias, in which case the label for the existing bin is used as the label for the alias, while the remainder of the discretization bins related to the multiple occurrences of the probability value Pi are discarded. Alternatively, a new bin may be created and allocated to the alias, e.g. inserted as a new first bin or appended as a new last bin, a unique label is attributed to the alias bin, and all the existing discretization bins related to the multiple occurrences of the probability value Pi are discarded. A probability value, P(alias), is assigned to the alias bin and equals P(alias) = m*Pi, where m designates the number of occurrences of the probability value Pi in the uncompressed probability distribution. The preceding steps may be repeated for other probability values Pj, Pj ≠ Pi, which have multiple occurrences in the partially reduced probability distribution. This allows to further reduce the probability distribution. In a fully reduced probability distribution each probability value only occurs one time. The partially or fully reduced probability distribution may be rescaled so that it has unit maximum probability (mode). In the right diagram of FIG. 11, a reduced probability distribution P'(X) has been obtained by allocating the bin labelled 'XC' to the alias bin. As there are six occurrences of the probability value p1 in the original probability distribution P(X), the probability for the alias bin is set to P(alias1) = 6*p1. Another alias with regard to multiple occurrences of the probability value p2 may be allocated to the bin labelled 'XF' in FIG. 11 and its associated probability set to P(alias2) = 2*p2. For the sake of clarity, no further alias bins and associated alias probabilities are shown in FIG. 11, although they may be allocated to yet different probability values P(X) of the probability distribution of interest.

With reference to FIG. 12, an embodiments of the invention is now described in which the programming unit 1205 of the sampling device 1200 is configured to determine a reduced probability mass function, by associating multiple occurrences of a probability of the probability mass function with a unique alias for this probability. The plurality of programming signals are then generated in accordance with the reduced probability mass function. The binary selection tree structure 1202, or a selected subtree thereof, receives sequences of random bits from the programmed probabilistic bit generators or pseudorandom number generators of a p-bit array at a set of input terminals 1201. Additionally, the root node 'NO' of the binary selection tree structure 1202, or the selected subtree thereof, is operatively coupled to a look up table 1203, which is interposed between the root node 'NO' and an output terminal 1206 of the sampling device 1200. The look up table 1203 comprises table entries for storing the different values of the discrete random variable that share the same probability value, alongside with the corresponding unique alias as a reference. A controller 1204 for the look up table 1203 is operatively connected to the programming unit 1205 and configured to manage the allocation and access of table entries. A table entry is allocated for each unique alias that has been assigned by the programming unit and retains the probability value that occurs multiple times, the different values of the discrete random variable that are associated with this probability value, and the assigned unique alias as reference. Preferably the indexing bit sequence (i.e., preliminary sample) that the root node 'NO' provides as an output is identical to the alias bin label, and may be translated into the alias bin label otherwise. Moreover, the controller 1204 for the look up table is configured to select an entry of the look up table based on a unique alias and, upon selection of the entry, uniformly draw a value out of the values of the discrete random variable stored in the selected entry. The randomly drawn values of the discrete random variable then constitutes the definite sample that is generated for the probability distribution of interest and is made available at the output terminal 1206 of the sampling device.

For instance, a table entry of the look up table may comprise the values XA through XF, the probability value p1 that they have in common and the assigned alias [XC, P(alias1)] in the previous example of FIG. 11. The controller 1204 may then select a table entry for access by using the alias bin label 'XC' as a reference to the table entry, wherein 'XC' corresponds to the preliminary sample (e.g. an index bit sequence) generated at the output of the root node 'NO'. Next, the controller 1204 retrieves one of the stored random variable values XA to XF in a randomized manner, wherein each random variable value is retrieved with equal probability (e.g. Prob = 1/6 in this example). To this end, the controller 1204 may comprise a random number generator that generates samples of a uniformly distributed random variable, or request a sample of a uniformly distributed random variable. The random variable value that is retrieved from the look up table, e.g. exactly one of XA to XF, constitutes the definite sample of the probability distribution of interest and is sent to the output terminal 1206 of the sampling device 1200.

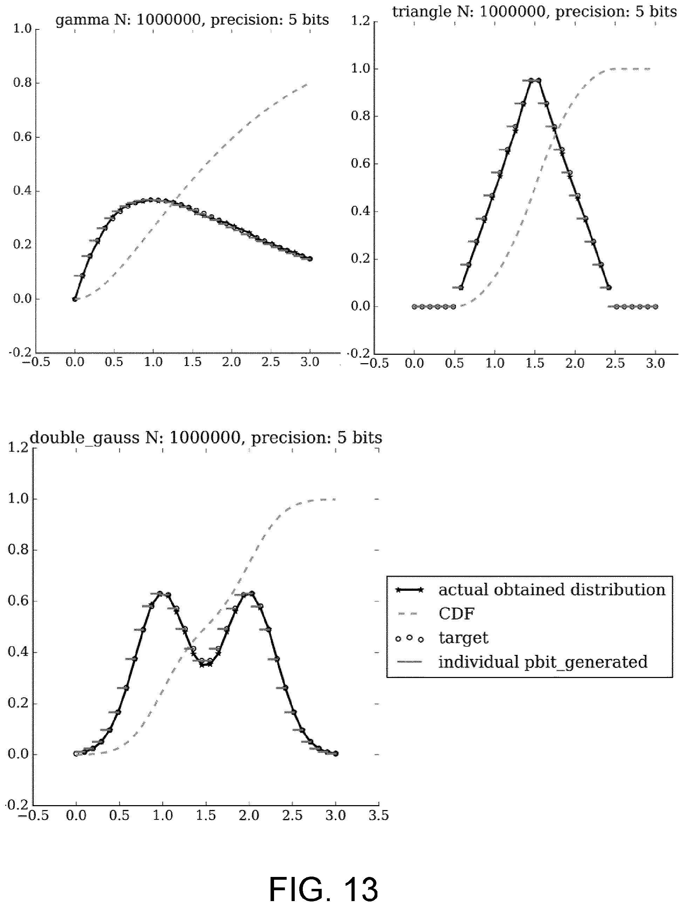

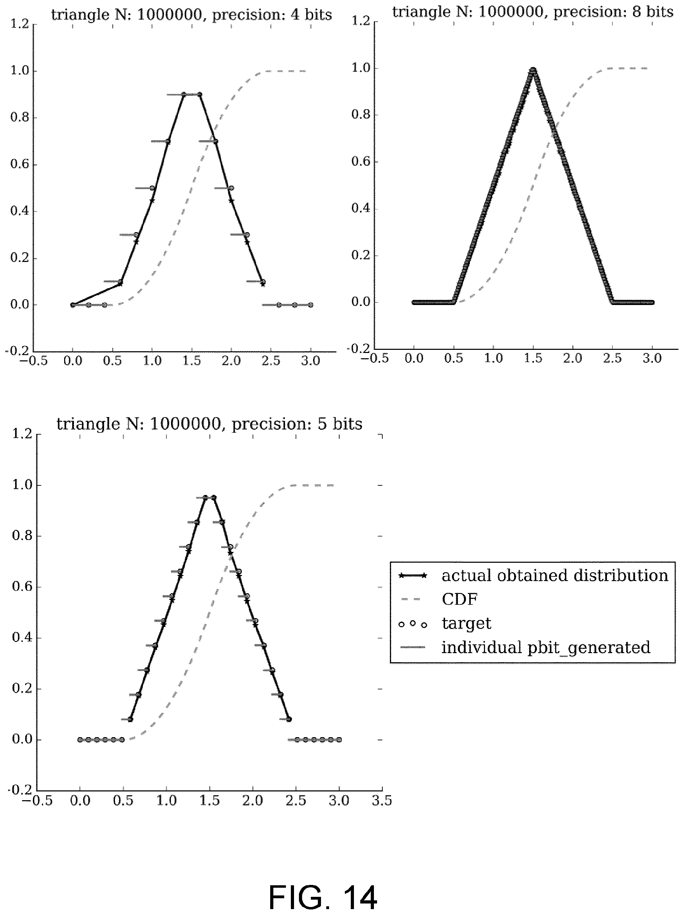

The sample generation process by a sampling device in accordance with embodiments of the invention has been simulated in software (e.g. in a model implemented in Python) running on a conventional computer. Simulation results for sampling a Gamma-type probability density function, a triangular probability density function and a double Gaussian probability density function with 5 bit precision are shown in FIG. 13. The normalized probability density functions (pdf) are plotted alongside with the corresponding cumulative density function (cdf) after 10^7 clock cycles of the sampling device, not counting the small initial delay due to the latency of the sampling device. The obtained probabilities closely follow the target probabilities of the three example probability density functions. FIG. 14 compares the target probabilities of a triangular probability density function to the probabilities obtained by simulation of the sampling device, when 10^7 samples are generated with 4-bit, 5-bit and 6-bit precision respectively.

The invention may be practiced in many ways and is not limited to the disclosed embodiments. Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

**Claims**

1. A hardware sampling device (200) for generating observations of arbitrary discrete random variables from probabilistic bits, the sampling device comprising:

   a programming unit (250) operatively connectible to a plurality of programmable probabilistic bit generators (271a-h), the programming unit being configured to generate a plurality of programming signals for adjusting a statistical expectation of probabilistic bits generated by each one of the probabilistic bit generators, wherein a discrete random variable of interest has an associated probability mass function and the programming unit is configured to generate the plurality of programming signals in accordance with the probability mass function associated with the discrete random variable of interest;
   a binary selection tree structure (210) comprising a plurality of nodes and a plurality of edge connections (214) for relaying output signals from children nodes of the binary selection tree structure to the respective parent nodes, each node having a depth in the binary selection tree structure and the plurality of nodes being organized into depth stages in accordance with each node's depth in the binary selection tree structure, and the binary selection tree structure having a root node as output node and leaf nodes as input nodes;
   a detection logic circuit (240) configured to detect a tie condition for each depth stage of the binary selection tree structure and generate a first select signal indicative of the tie condition;
   wherein each node comprises: a pair of input terminals (211a-b) for receiving a corresponding pair of input signals, a position index bit being associated with the pair of input terminals for identifying the different input terminals of the node, an output terminal (212), and a selector circuit (213) connected between said input terminals and said output terminal;
   wherein each input signal received by one of the plurality of nodes comprises a probabilistic bit as a first signal component and an indexing bit sequence as second signal component, the indexing bit sequences received by the leaf nodes being empty sequences;
   wherein the input terminal of each leaf node is connectible to a respective one of the probabilistic bit generators to receive a corresponding probabilistic bit as the first signal component of the input signal;
   wherein a tie condition and the therefor generated first select signal are affirmative for any one depth stage if the first signal components of at least one pair of input signals received by the nodes of the depth stage both represent a logical '1' state;
   wherein the selector circuit (213) of each node is configured to:

      randomly admit one of the two input signals present at the pair of input terminals of the node with equal probabilities to the output terminal of the node if the corresponding first select signal is affirmative, or else admit the input signal of which the first signal component represents a logical '1' state to the output terminal of the node,
      always supply the position index bit related to the admitted input signal to the output terminal of the node, the input signal admitted to the output terminal of the node being the output signal of the node;

   wherein the binary selection tree structure is adapted to update the output signal of each node by concatenating the position index bit at the output terminal of the node with the second signal component of the output signal of the node, thus obtaining an extended indexing bit sequence as updated second signal component, and relay the updated output signals of children nodes to the respective parent nodes.

2. The sampling device of claim 1, wherein the selector circuits are combinatorial circuits.

3. The sampling device of claim 1 or 2, wherein the detection logic circuit comprises a separate detection unit for each depth stage of the binary selection tree structure, the detection unit for each depth stage comprising a logic AND gate for each node of that depth stage and an m-input logic OR gate, m being number of nodes of that depth stage, wherein the input terminals of nodes of that depth level are connected to inputs of the corresponding logic AND gate and outputs of the logic AND gates are connected to inputs of the m-input logic OR gate.

4. The sampling device of claim 1 or 2, wherein detection logic circuit comprises a separate detection unit for each depth stage of the binary selection tree structure, the detection unit for each depth stage comprising a pre-chargeable bit line and a pair of controllable series-connected switching elements for each node of that depth stage, wherein the input terminals of nodes of that depth stage are operatively connected to control terminals of the correspond pair of switching elements.

5. The sampling device of claim any one of the preceding claims, wherein the binary selection tree structure is a perfect binary selection tree.

6. The sampling device of any one of the preceding claims, wherein the binary selection tree structure is further configured to:
independently draw an auxiliary random bit for each node and supply the auxiliary random bit as a second select signal to the selector circuit of the node if the corresponding first select signal is affirmative, the auxiliary random bits being Bernoulli distributed with expected value p = 0.5;
wherein the selector circuit of each node is further configured to admit one of the two input signals present at the pair of input terminals of the node as a function of the second select signal to the output terminal of the node if the corresponding first select signal is affirmative.

7. The sampling device according to claim 6, further comprising at least one random number generator for generating the auxiliary random bits for each node.

8. The sampling device of any one of the preceding claims, wherein the selector circuit of each node is further configured to admit one of the two input signals by default to the output terminal of the node if the first select signal is not affirmative and none of the first signal components of the pair of input signals represents a logical '1' state.

9. The sampling device of any one of the preceding claims, wherein the binary selection tree structure further comprises hardware registers arranged between the nodes of subsequent depth stages, the edge connections relaying output signals through one of the hardware registers.

10. The sampling device of any one of the preceding claims, wherein a tree size of the binary selection tree structure is reconfigurable and/or wherein the sampling device supports subtree operation of the binary selection tree.

11. The sampling device of any one of the preceding claims, further comprising a look up table connected to the output node, and a controller for the look up table, wherein the programming unit is further configured to determine a reduced probability mass function, by associating multiple occurrences of a probability of the probability mass function with a unique alias for the probability, and generate the plurality of programming signals in accordance with the reduced probability mass function, wherein the look up table is configured to store the values of the discrete random variable that have a common probability in an entry of the look up table, alongside with the corresponding unique alias as a reference to the entry, wherein the controller for the look up table is configured to select an entry of the look up table based on a unique alias and, upon selection of the entry, uniformly draw a value out of the values of the discrete random variable stored in the selected entry.

12. The sampling device of any one of the preceding claims, further comprising a plurality of programmable probabilistic bit generators, the programming unit being operatively coupled to the plurality of programmable probabilistic bit generators.

13. A method of generating observations of a discrete random variable of interest, a probability mass function for the discrete random variable of interest associating each value of the discrete random variable with a corresponding probability, the method comprising the steps of:

   generating a probabilistic bit stream for each value of the discrete random variable of interest, a statistical expectation of random bits comprised by the probabilistic bit stream corresponding to the probability mass function of said value of the discrete random variable of interest;
   obtaining a sample of random bits from the probabilistic bit streams generated in the previous step;
   providing a binary selection tree in hardware, the binary selections tree comprising a plurality of nodes, the binary selection tree having leaf nodes as input nodes and a root node as output node, each node of the binary selection tree accepting one bit of an ordered bit pair as node output and each parent node of the binary selection tree receiving an ordered bit pair from the corresponding child nodes as node inputs;

arranging the random bits of the sample of random bits into ordered pairs of random bits and applying the ordered pairs of random bits to the respective leaf nodes of the binary selection tree;

completing a predetermined number of selection cycles of the binary selection tree to obtain an observation of the discrete random variable of interest as output of the root node;

wherein completing each selection cycle of the binary selection tree comprises:

dividing the nodes of the binary selection tree structure into a first node group and a second node group, by assigning nodes belonging to a same depth level of the binary selection tree to the first node group if a tie is detected for that depth level, and to the second node group otherwise, wherein a tie for a bit pair corresponds to both bits having observed logical states equal to logical one;

for each node of the second node group, randomly choosing with uniform probability a bit of the ordered bit pair received as node inputs as the one bit to be accepted as node output;

for each node of the second node group, selecting a non-zero bit of the ordered bit pair received as node inputs as the one bit to be accepted as node output;

for each node, recording a position index bit associated with the position of the bit accepted as node output in the ordered bit pair received as node inputs;

updating an indexing bit sequence for each parent node, by concatenating the position index bit recorded for the parent node with the indexing bit sequence of the child node supplying the bit accepted as the parent node output;

updating an indexing bit sequence for each leaf node, by appending the position index bit recorded for the leaf node to an empty sequence.

14. The method of claim 13, further comprising the step of discretizing a continuous probability density function associated with a continuous random variable, thus obtaining the probability mass function for the discrete random variable of interest as an approximation of the continuous probability function.

15. The method of claim 13 or 14, further comprising the steps of:

providing a plurality of programmable probabilistic bit generators;

assigning each value of the discrete random variable to one of the programmable probabilistic bit generators;

programming the probabilistic bit generators in accordance with the probability mass function;

optionally, determining a reduced probability mass function, by associating multiple occurrences of a probability of the probability mass function with a unique alias for the probability;

optionally, storing the values of the discrete random variable that have a common probability in an entry of a look up table, alongside with the corresponding unique alias as a reference to the entry, selecting an entry of the look up table based on a unique alias and, upon selection of the entry, uniformly draw a value out of the values of the discrete random variable stored in the selected entry of the look up table.

FIG. 1

FIG. 2

N20

RB0 (0)

RB1 (0)

(0,/)

[DP2; RBS20]

[RB20; IND20]

[0; 0]

N10

[RB10; IND10]

[1; 1]

(1,1)

[DP1; RBS10]

N21

RB2 (0)

RB3 (1)

(0,/)

[DP2; RBS21]

[RB21; IND21]

N0

[1; 11]

[1; 00]

[011]

(1,0)

[DP0; RBS0]

N22

RB4 (1)

RB5 (0)

(0,/)

[DP2; RBS22]

[RB22; IND22]

[1; 0]

N11

[1; 1]

(1,0)

[DP1; RBS11]

[RB11; IND11]

N23

RB6 (0)

RB7 (1)

(0,/)

[DP2; RBS23]

[RB23; IND23]

S2                    S1                    S0

FIG. 3

FIG. 4

FIG. 5

FIG. 6

FIG. 7

FIG. 8

FIG. 9

FIG. 10

P(X)

P = p2

P = p1

XA   XB   XC   XD  XE  XF   X

XG   XH

P'(X)

P(alias1)

P = p1

XC   X

## FIG. 11

1202

N0

1203

1206

1205

1204

1201

1200

## FIG. 12

FIG. 13

FIG. 14

Europäisches Patentamt

European Patent Office

Office européen des brevets

# EUROPEAN SEARCH REPORT

**Application Number**

EP 23 21 6705

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ZHAO SHIRUI ET AL: "Discrete Samplers for Approximate Inference in Probabilistic Machine Learning", 2022 DESIGN, AUTOMATION & TEST IN EUROPE CONFERENCE & EXHIBITION (DATE), EDAA, 14 March 2022 (2022-03-14), pages 1221-1226, XP034126011, DOI: 10.23919/DATE54114.2022.9774623 [retrieved on 2022-05-19] * Sections II, III; figure 3 * | 1-15 | INV. G06F7/58 |
| A | ANGSHUMAN KARMAKAR ET AL: "Pushing the speed limit of constant-time discrete Gaussian sampling. A case study on the Falcon signature scheme", DAC '19: PROCEEDINGS OF THE 56TH ANNUAL DESIGN AUTOMATION CONFERENCE 2019, ACM, 2 PENN PLAZA, SUITE 701NEW YORKNY10121-0701USA, 2 June 2019 (2019-06-02), pages 1-6, XP058435242, DOI: 10.1145/3316781.3317887 ISBN: 978-1-4503-6725-7 * Section 2, 4 * | 1-15 | |
| A | FERAS A SAAD ET AL: "Optimal Approximate Sampling from Discrete Probability Distributions", ARXIV.ORG, CORNELL UNIVERSITY LIBRARY, 201 OLIN LIBRARY CORNELL UNIVERSITY ITHACA, NY 14853, 13 January 2020 (2020-01-13), XP081578145, DOI: 10.1145/3371104 * Section 2, 5 * | 1-15 | |

**TECHNICAL FIELDS SEARCHED (IPC)**

G06F

The present search report has been drawn up for all claims

| Place of search | Date of completion of the search | Examiner |
|---|---|---|
| Munich | 23 May 2024 | Tenbieg, Christoph |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **P. DEBASHIS et al.** Gaussian Random Number Generator With Reconfigurable Mean and Variance Using Stochastic Magnetic Tunnel Junctions. *IEEE Magnetics Letters*, 2022, vol. 13, 1-5